# EUROPÄISCHE PATENTSCHRIFT

(11) **EP 1 499 421 B1**
(45) Veröffentlichungstag und Bekanntmachung des Hinweises auf die Patenterteilung: **24.05.2006**
(21) Anmeldenummer: 03747351.9
(22) Anmeldetag: 06.03.2003
(51) Int. Cl.: B01D 53/86

(54) **OZONFILTERMATERIAL**
OZONE FILTER MATERIAL
MATERIAU DE FILTRATION D'OZONE

(30) Priorität: 03.05.2002 DE 10219966
(43) Veröffentlichungstag der Anmeldung: 26.01.2005
(73) Patentinhaber: Carl Freudenberg KG, 69469 Weinheim (DE)
(72) Erfinder: REINHARDT, Heinz, 68535 Edingen (DE); BORRIS, Richard, 85101 Lenting (DE); KLAUSNITZER, Bernd, 69488 Birkenau (DE); ZAPLATILEK, Michael, 69488 Birkenau (DE)
(86) Internationale Anmeldenummer: PCT/EP2003/002272
(87) Internationale Veröffentlichungsnummer: WO 2003/092867

(56) Entgegenhaltungen:
- EP-A- 0 405 404
- EP-A- 0 526 077
- DE-A- 3 719 216
- JP-A- 62 161 372
- PATENT ABSTRACTS OF JAPAN vol. 018, no. 198 (C-1187), 7. April 1994 (1994-04-07) -& JP 06 000318 A (TAKEDA CHEM IND LTD), 11. Januar 1994 (1994-01-11) -& DATABASE WPI Section Ch, Week 199406 Derwent Publications Ltd., London, GB; Class D22, AN 1994-045088 XP002239547 & JP 06 000318 A (TAKEDA CHEM IND LTD), 11. Januar 1994 (1994-01-11)
- PATENT ABSTRACTS OF JAPAN vol. 2002, no. 08, 5. August 2002 (2002-08-05) & JP 2002 095927 A (NIKKO PLANT:KK), 2. April 2002 (2002-04-02)
- PATENT ABSTRACTS OF JAPAN vol. 016, no. 025 (C-0903), 22. Januar 1992 (1992-01-22) & JP 03 238011 A (KURARAY CHEM CORP), 23. Oktober 1991 (1991-10-23) -& DATABASE WPI Section Ch, Week 199935 Derwent Publications Ltd., London, GB; Class A88, AN 1991-356988 XP002239548 & JP 03 238011 A (KURARAY CHEM CO LTD), 23. Oktober 1991 (1991-10-23)

## Beschreibung

Die Erfindung betrifft ein Ozonfiltermaterial mit einer lang anhaltenden Ozonabbauleistung.

Bei lonisationsprozessen entstehendes Ozon muß aufgrund seiner Toxizität und umweltschädigenden Eigenschaften abgebaut werden. Bei verschiedenen Luftreinigungsgeräten wird Ozon erzeugt, um mit seiner Hilfe unerwünschte Gerüche aus der Luft zu entfernen oder das Wachstum von Mikroorganismen zu reduzieren. Zum Abbau des verbleibenden Ozons wird in der Regel ein Ozonfiltermedium bestehend aus einer Aktivkohleschicht eingesetzt.

### Stand der Technik

Aus dem Dokument JP 57177327 ist eine Vorrichtung zur Geruchsverminderung bekannt, bei der die mit Ozon vermischte Luft durch einen mit einer wässrigen Bromid- und/oder Jodidlösung imprägnierten Filter und anschließend durch eine Schicht aus Aktivkohle geleitet wird.

Allerdings nimmt die Abbauleistung von Aktivkohle für Ozon schon nach kurzer Zeit ab, so dass für die Aufrechterhaltung der Ozonabbauleistung entweder ein Filterwechsel erfolgen muß oder aber eine Aktivkohlemenge eingesetzt wird, die für einen längeren Zeitraum einen ausreichenden Ozonabbau gewährleistet. In jedem Fall ergeben sich aber hinsichtlich der Kosten Nachteile, weil entweder ein häufiger Filterwechsel erfolgen muß oder aufgrund der Druckdifferenz am Filter mehr Energie für den Transport des Gases durch das Filtermedium aufgewendet werden muß.

### Darstellung der Erfindung

Die Erfindung hat sich die Aufgabe gestellt, ein Ozonfiltermaterial anzugeben, welches gegenüber Filtermaterialien mit vergleichbaren filtertechnischen Parametern wie Druckdifferenz oder Aktivkohlegehalt eine deutlich verlängerte Standzeit hinsichtlich der Ozonabbauleistung zeigt.

Erfindungsgemäß wird die Aufgabe durch ein Ozonfiltermaterial gelöst, welches aus einem Vliesstoff-Filtermaterial besteht, 100 - 800 g/m² Aktivkohle enthält, wobei die Aktivkohle so mit einer wässrigen Lösung einer organischen Säure und eines Bromids und/oder Jodids imprägniert wurde, daß sie nach dem Trocknen 0,1-5 Gew.-% dieser organischen Säure und 0,1-5 Gew.-% dieses Bromid- und/oder Jodidsalzes enthält. Ein solches Ozonfiltermaterial zeigt gegenüber anderen Filtermaterialien eine lang andauernde, nahezu konstante Ozonabbauleistung.

Vorzugsweise ist das erfindungsgemäße Ozonfiltermaterial eines, bei dem die Aktivkohle im Trocken zustand 0,5 - 3 Gew-% einer mehrwertigen organischen Säure und 0,25 - 1,5 Gew.-% eines Alkali- oder Erdalkalibromids und/oder eines -jodids enthält.

Besonders bevorzugt ist ein Ozonfiltermaterial, das mit Zitronensäure und Kaliumjodid imprägnierte Aktivkohle enthält.

Das erfindungsgemäße Ozonfiltermaterial ist vorzugsweise so ausgebildet, dass die Aktivkohle zwischen zwei Vliesstoffschichten eingebracht ist.

Besonders bevorzugt ist ein Ozonfiltermaterial, bei dem die Aktivkohle unter Verwendung eines Bindemittels an die Vliesstoffschichten gebunden ist. Die Vliesstoffschichten bestehen dabei vorzugsweise aus synthetischen Fasern oder Filamenten.

Die Erfindung betrifft letztlich die Verwendung eines Ozonfiltermaterials in Gebäudezuluft-, Autoinnenraumfiltem- oder Filtern in Raumluftreinigergeräten .

Die Erfindung wird nachfolgend anhand eines Beispiels zweier Vergleichsbeispiele näher dargestellt.

### Beispiel

Ein Aktivkohlegranulat, welches eine Teilchengröße besitzt, das ein Sieb mit 30 x 70 mesh Maschenweite passiert, wird jeweils mit wässrigen Lösungen von Zitronensäure und Kaliumjodid so imprägniert, dass sie im Trockenzustand 1,0 Gew.-% Zitronensäure und 0,5 Gew.-% Kaliumjodid enthält. Die imprägnierte Aktivkohle wird mit einem Bindemittel gemischt und in einem Streuprozess in einer Menge von 400 g Aktivkohle/m² auf ein Vliesstoff-Filtermaterial aufgebracht und mit einer weiteren Vliesstoff-Filterschicht abgedeckt. Es wird nach dem Plissieren und Falten ein Filtermedium erhalten, welches bei einer Filterfläche von 0,164 m² 65 g Aktivkohlemenge enthält.

### Vergleichsbeispiel 1

Das Aktivkohlegranulat gemäß Beispiel 1 wird mit einer wässrigen Lösung von Kaliumjodid so imprägniert, so dass es nach dem Trocknen die Aktivkohle 0,5 Gew.-% Kaliumjodid enthält. Die Verarbeitung zu einem Filtermaterial erfolgt analog dem Beispiel 1.

### Vergleichsbeispiel 2

Aktivkohlegranulat gemäß Beispiel 1 wird analog Beispiel 1 zu einem Filtermedium verarbeitet.

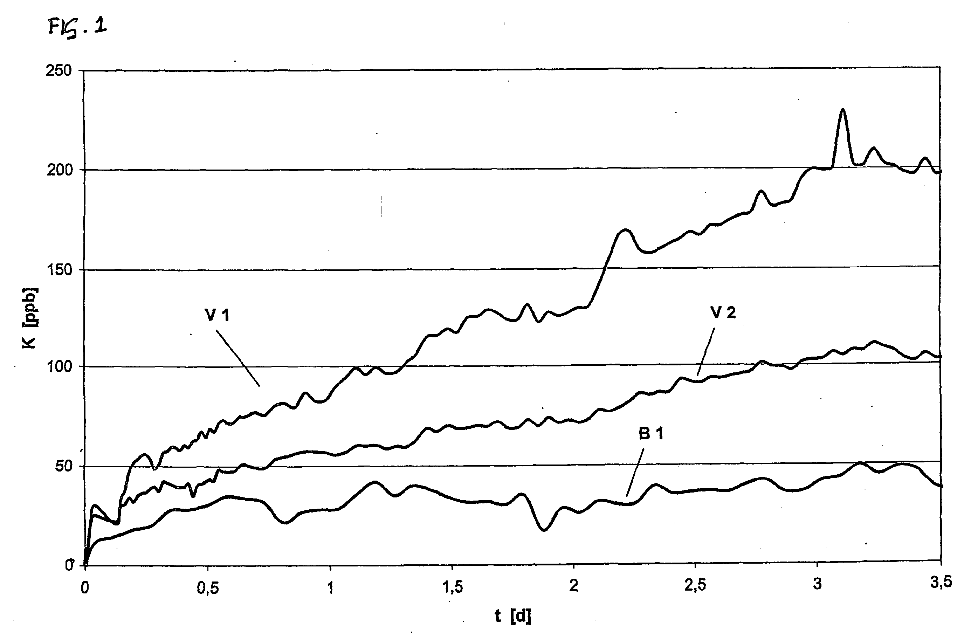

Abbildung 1 zeigt die Ozonabbauleistung des Beispiels (B 1) und der Vergleichsbeispiele (V1, V2), die mit den hergestellten Ozonfiltermedien erzielt wurden. Dabei erfolgte der Test in einem Strömungskanal mit einer Strömungsgeschwindigkeit von 1,5 m/s und einem Volumenstrom von ca. 100 m³/h unter Laborbedingungen bei Raumtemperatur von ca. 23 °C. Mit einem handelsüblichen Ozongenerator wurde rohluftseitig eine konstante Ozonkonzentration von 750 ppb (+/- 50 ppb) eingestellt. Das erfindungsgemäße Filtermedium zeigt eine anhaltend niedrige Ozongaskonzentration (K in [ppb]) auf der Reingasseite (Abbauleistung ca. 93 % nach 3,5 Tagen [d]) während die Vergleichsbeispiele nur noch 86 % bzw. ca. 73 % Ozonabbau nach 3 Tagen Versuchsdauer liefern.

## Patentansprüche

1. Ozonfiltermaterial bestehend aus einem Vliesstoff-Filtermaterial, welches 100 bis 800 g/m² Aktivkohle enthält, die im Trocken zustand 0,1 bis 5 Gew.% dieser organischen Säure und 0,1 bis 5 Gew.-% des Bromid- und/oder Jodidsalzes enthält.

2. Ozonfiltermaterial nach Anspruch 1, **dadurch gekennzeichnet, dass** die Aktivkohle so mit einer wässrigen Lösung einer organischen Säure und eines Bromids und/oder Jodids imprägniert wurde, daß sie nach dem Trocknen 0,5 bis 3 Gew.-% einer mehrwertigen organischen Säure und 0,25 bis 1,5 Gew.-% eines Alkali- oder Erdalkalibromids und/oder eines -jodids enthält.

3. Ozonfiltermaterial nach Anspruch 1 oder 2, **dadurch gekennzeichnet, dass** es mit Zitronensäure und Kaliumjodid imprägnierte Aktivkohle enthält.

4. Ozonfiltermaterial nach einem der Ansprüche 1 bis 3, **dadurch gekennzeichnet, dass** die Aktivkohle zwischen zwei Vliesstoffschichten eingebracht ist.

5. Ozonfiltermaterial nach einem der Ansprüche 1 bis 4, **dadurch gekennzeichnet, dass** die Aktivkohle unter Verwendung eines Bindemittels an die Vliesstoffschichten gebunden ist.

6. Ozonfiltermaterial nach einem der Ansprüche 1 bis 5, **dadurch gekennzeichnet, dass** die Vliesstoffschichten aus synthetischen Fasern oder Filamenten bestehen.

7. Verwendung eines Ozonfiltermaterials gemäß Anspruch 1 in Gebäudezuluft-, Autoinnenraum- oder Raumluftfiltern.

## Claims

1. Ozone filter material consisting of a nonwoven filter material which contains 100 to 800 g/m² of activated carbon which has been impregnated with an aqueous solution of an organic acid and a bromide and/or iodide in such a manner that, after drying, it contains 0.1 to 5% by weight of this organic acid and 0.1 to 5% of the bromide and/or iodide salt.

2. Ozone filter material according to Claim 1, **characterized in that** the activated carbon, in the dry state, contains 0.5 to 3% by weight of a polybasic organic acid and 0.25 to 1.5% by weight of an alkali metal bromide or alkaline earth bromide and/or an alkali metal iodide or alkaline earth iodide.

3. Ozone filter material according to Claim 1 or 2, **characterized in that** it contains activated carbon impregnated with citric acid and potassium iodide.

4. Ozone filter material according to one of Claims 1 to 3, **characterized in that** the activated carbon is introduced between two nonwoven layers.

5. Ozone filter material according to one of Claims 1 to 4, **characterized in that** the activated carbon is bonded to the nonwoven layers using a binder.

6. Ozone filter material according to one of Claims 1 to 5, **characterized in that** the nonwoven layers consist of synthetic fibres or filaments.

7. Use of an ozone filter material according to Claim 1 in building intake air, car interior or room air filters.

## Revendications

1. Matériau de filtration d'ozone constitué d'un matériau de filtration non tissé, qui contient 100 à 800 g/m² de charbon actif qui a été imprégné d'une solution aqueuse constituée d'un acide organique et d'un bromure et/ou d'un iodure de manière à contenir, après séchage, 0,1 à 5% en poids dudit acide organique et 0,1 à 5% en poids du sel bromure et/ou iodure.

2. Matériau de filtration d'ozone selon la revendication 1, **caractérisé en ce que** le charbon actif à l'état sec contient 0,5 à 3% en poids d'un acide organique polyvalent et 0,25 à 1,5% en poids d'un bromure et ou d'un iodure de métal alcalin ou de métal alcalino-terreux.

3. Matériau de filtration d'ozone selon la revendication 1 ou 2, **caractérisé en ce qu'**il contient du charbon actif imprégné d'acide citrique et d'iodure de potassium.

4. Matériau de filtration d'ozone selon l'une quelconque des revendications 1 à 3, **caractérisé en ce que** le charbon actif est déposé entre deux couches de non-tissé.

5. Matériau de filtration d'ozone selon l'une quelconque des revendications 1 à 4, **caractérisé en ce que** le charbon actif est lié aux couches de non-tissé en ayant recours à un liant.

6. Matériau de filtration d'ozone selon l'une quelconque des revendications 1 à 5, **caractérisé en ce que** les couches de non-tissé sont constituées de fibres ou de filaments synthétiques.

7. Utilisation d'un matériau de filtration d'ozone selon la revendication 1 dans des filtres d'amenée d'air de bâtiments, des filtres pour habitacles de voitures ou des filtres pour la ventilation de locaux.
